# EUROPÄISCHE PATENTSCHRIFT

(11) **EP 0 960 776 B1**
(45) Veröffentlichungstag und Bekanntmachung des Hinweises auf die Patenterteilung: **20.10.2004**
(21) Anmeldenummer: 99104818.2
(22) Anmeldetag: 11.03.1999
(51) Int. Cl.: B60Q 7/00

(54) **Zusammenlegbares Warndreieck**
Foldable warning triangle
Triangle de présignalisation pliable

(30) Priorität: 25.05.1998 DE 19823201; 25.05.1998 DE 19823296
(43) Veröffentlichungstag der Anmeldung: 01.12.1999
(73) Patentinhaber: Gebra GmbH & Co. Sicherheitsprodukte KG, 53773 Hennef (DE)
(72) Erfinder: Raderschad, Peter, 53773 Hennef (DE); Raderschad, Manfred, 53773 Hennef (DE); Walgenbach, Reinhold, 53773 Hennef (DE); Stei, Alexander, 51545 Walbröl (DE)
(74) Vertreter: Brandenburg, Thomas

(56) Entgegenhaltungen:
- EP-A- 0 597 343
- EP-A- 0 649 775
- FR-A- 2 280 159

## Beschreibung

Die Erfindung betrifft ein zusammenlegbares Warndreieck mit den Merkmalen im Oberbegriff von Anspruch 1 bzw. 8.

Bei zusammenlegbaren Warndreiecken nach EC-Regelung sind die roten Fluoreszenzleisten bisher an den Reflektorleisten starr angeformt, so daß sich für das zusammengelegte Dreieck eine Breite ergibt, die etwa der Summe der Breiten von Reflektorleiste und Fluoreszenzleiste ist. Für die Unterbringung des zusammengelegten Warndreiecks im Kraftfahrzeug ist es von Vorteil, wenn seine Breite verringert werden könnte. Es ist zwar bekannt, anstelle der angeformten Fluoreszenzleisten eine Kunststoff-Folie mit einer fluoreszierenden Beschichtung zu verwenden. Bisher steht diese Fluoreszenzbeschichtung aber nur auf PVC-Basis zur Verfügung, was aus Gründen des Umweltschutzes unerwünscht ist.

Die Aufgabe der vorliegenden Erfindung besteht in der Schaffung eines zusammenlegbaren Warndreiecks, das im zusammengelegten Zustand kompakt und raumsparend ist und ohne Polyvinylchlorid für den fluoreszierenden Teil des Dreiecks auskommt. Insbesondere soll das Warndreieck zusammengelegt nur etwa die Breite der Reflektorleisten des Dreiecks haben. Ferner soll das Auseinandernehmen des zusammengelegten Warndreiecks erleichtert werden. Weitere Vorteile ergeben sich aus der folgenden Beschreibung.

Diese Aufgabe wird bei dem eingangs genannten Warndreieck nach einem Aspekt der Erfindung dadurch die Merkmale des Anspruchs 1 gelöst.
Die starren Fluoreszenzleisten sind von der Reflektorleiste getrennte Teile, die beim Aufrichten des zusammengelegten Warndreiecks zum Zwecke der Aufstellung in ihre Sichtlage neben der Reflektorleiste bewegt werden. Beim Zusammenlegen des Warndreiecks werden die Fluoreszenzleisten umgekehrt in eine eingefahrene Lage vor, hinter oder in der zugehörigen Reflektorleiste bewegt, wodurch die Breite des zusammengelegten Warndreiecks auf die Breite der Reflektorleisten reduziert wird. Das zusammengelegte Warndreieck ist daher insgesamt kompakter.

Bei der bevorzugten Ausführungsform des erfindungsgemäßen Warndreiecks ist wenigstens eine Fluoreszenzleiste durch Feder(n) in der ausgefahrenen Lage gehalten und gegen die Federspannung einfahrbar. Insbesondere sind beide Fluoreszenzleisten der schwenkbaren Seitenreflektorleisten auf diese Weise gefedert. Beim Aufrichten dieser Reflektorleisten fahren ihre Fluoreszenzleisten automatisch in ihre Sichtlage aus. Beim Zusammenlegen des Warndreiecks stoßen diese Fluoreszenzleisten gegen einen an der Basisleiste bzw. Metallplatte befindlichen Anschlag, wodurch sie gegen die Spannung der Feder(n) wieder eingefahren werden.

Bei einer anderen Ausführungsform des erfindungsgemäßen Warndreiecks sind die roten Fluoreszenzleisten der beiden Seitenreflektorleisten durch flexible Koppelglieder mit ihrer Seitenreflektorleiste verbunden. Durch diese flexible Kopplung können die Fluoreszenzleisten im zusammengelegten Zustand des Dreiecks hinter die Reflektorleisten schwenken. Beim Aufrichten der Seitenreflektorleisten bewirkt die flexible Kopplung, daß die Fluoreszenzleiste von ihrer Reflektorleiste mit aufgerichtet wird, dabei jedoch gegenüber die Reflektorleiste soweit zurückbleibt, daß sie in ihre ausgefahrene Sichtlage neben der Reflektorleiste kommt.

Bei der bevorzugten Ausführungsform des erfindungsgemäßen Warndreiecks ist die Fluoreszenzleiste der Basisreflektorleiste beidendig über Gelenke mit den beiden anderen Fluoreszenzleisten und der Basisreflektorleiste oder ihrer Metallplatte verbunden. Durch diese gelenkige Kopplung der Basisfluoreszenzleiste mit den Seitenfluoreszenzleisten wird erreicht, daß beim Aufrichten der Seitenreflektorleisten und damit der Seitenfluoreszenzleisten auch die Basisfluoreszenzleiste aus ihrer eingefahrenen Position in eine ausgefahrene Position neben der Basisreflektorleiste gehoben wird. Umgekehrt wird beim Herabschwenken der Seitenreflektorleisten und damit der Seitenfluoreszenzleisten auch die Basisfluoreszenzleiste automatisch wieder eingefahren. Zweckmäßigerweise ist hierbei die Fluoreszenzleiste der Basisreflektorleiste wenigstens an einem Ende über ein Verschiebungsgelenk mit einer an der Basisreflektorleiste und/oder Metallplatte angelenkten Lasche verbunden. Zweckmäßigerweise besteht diese Verbindung an den beiden Enden der Basisfluoreszenzleiste. Hierbei kann das Verschiebungsgelenk in einem Langloch verschieblich sein. Dadurch ist es möglich, die Basisfluoreszenzleiste praktisch in Parallellage zur Basisreflektorleiste zu verschieben.

Vorzugsweise sind an den.Fluoreszenzleisten Zapfen angeformt, die in auf den Rückseiten der Reflektorleisten ausgebildete Führungsnuten eingreifen. Diese Führung der Fluoreszenzleisten kommt im allgemeinen an den beiden Seitenreflektorleisten zur Anwendung. Die Führungsnuten verlaufen vorzugsweise quer zur Längsrichtung der Reflektorleisten und begrenzen die Aus- und Einfahrbewegung der Fluoreszenzleisten. Je nach dem, ob die Fluoreszenzleiste beim Zusammenlegen des Warndreiecks vor oder hinter ihre Reflektorleiste fährt, ist der genannte Zapfen an der Rückseite oder der Vorderseite der Fluoreszenzleiste angebracht.

Bei einer speziellen Ausführungsform des erfindungsgemäßen Warndreiecks enthalten die Reflektorleisten einen Aufnahmeraum mit einem Schlitz für die zugehörige Fluoreszenzleiste und ist in die Reflektorleisten wenigstens eine die Fluoreszenzleiste nach außen drückende Feder eingesetzt. Durch die Anordnung der Feder(n) und der Führung der Fluoreszenzleiste in der Reflektorleiste ist die Bewegungsmechanik der Fluoreszenzleiste gegen Beschädigung von außen geschützt.

Die Aufgabe wird bei dem eingangs genannten Warndreieck nach einem weiteren Aspekt der Erfindung durch die Merkmale des Anspruchs 8 gelöst. Die Fluoreszenzleisten sind von der Reflektorleiste getrennte Teile, die beim Aufrichten der Seitenreflektorleisten zur Bildung des Dreiecks zum Zwecke seiner Aufstellung in ihre Sichtlage neben der Reflektorleiste ausgeschwenkt werden, so daß sie zusammen innerhalb des Reflektorleistendreiecks ein fluoreszierendes Dreieck bilden. Beim Zusammenlegen des Warndreiecks werden die Fluoreszenzleisten an ihre Reflektorleisten umgeklappt, wodurch die Breite des zusammengelegten Warndreiecks auf die Breite der Reflektorleisten reduziert wird. Das zusammengelegte Warndreieck ist daher insgesamt kompakter und leichter verstaubar als ein Warndreieck, bei dem die fluoreszierenden Leisten an den Reflektorleisten starr angebracht sind, so daß eine Breitenverringerung nicht möglich ist. Vorzugsweise sind die Fluoreszenzleisten an die Vorderseite ihrer Reflektorleisten schwenkbar.

Bei einer bevorzugten Ausführungsform dieses Warndreiecks ist die Fluoreszenzleiste der Basisreflektorleiste durch ein flexibles Koppelglied mit einer Seitenreflektorleiste verbunden. Das Koppelglied kann eine elastische oder unelastische Schnur sein. Es bewirkt beim Aufrichten der Seitenreflektorleiste das Hochschwenken der Basisfluoreszenzleiste in ihre Sichtlage. Die Seitenfluoreszenzleisten fallen beim Aufrichten der Seitenreflektorleisten wenigstens teilweise in ihre Sichtlage. Zur gegenseitigen Stabilisierung in der ausgeschwenkten Sichtlage können diese beiden Fluoreszenzleisten am oberen Ende ein Verbindungsmittel tragen.

Bei einer anderen Ausführungsform dieses Warndreiecks ist die eine Fluoreszenzleiste an einer Reflektorleiste angelenkt und bestehen die beiden anderen Fluoreszenzleisten aus Teilstücken, sind diese Teilstücke untereinander und mit der Fluoreszenzleiste über parallele Schwenkachsen verbunden und ziehharmonikaartig zusammenlegbar und weist das der genannten Reflektorleiste entfernte Teilstück ein Mittel zur Anbringung an einer der beiden anderen Reflektorleisten auf. Der gesamte Fluoreszenzteil des Warndreiecks besteht bei dieser Ausführungsform aus einem zusammenhängenden und zusammenlegbaren Gebilde. Das Gebilde umfaßt eine vorzugsweise trapezförmige Fluoreszenzleiste, während die beiden anderen Leisten aus mehreren separaten Gliedern besteht, die ziehharmonikaartig auf die Breite der Fluoreszenzleiste zusammengelegt und hinter die zugehörige Reflektorleiste umgelegt werden kann, so daß sich wiederum eine Breitenreduktion auf die Reflektorleistenbreite ergibt. Um dieses ziehharmonikaartige Gebilde in seiner aufgerichteten Lage zu stabilisieren, ist das Anbringungsmittel, z.B. eine Öse oder dergl. vorgesehen.

Vorzugsweise sind die Schwenkachsen zwischen Reflektorleiste(n) und Fluoreszenzleiste(n) bzw. zwischen der Fluoreszenzleiste und den Teilstücken sowie zwischen den Teilstücken untereinander durch Filmscharniere oder durch mechanische Scharniere gebildet, deren Teile durch Spritzgießen geformt sind. Wenn die Schwenkachsen durch Filmscharniere gebildet werden, kann das die Fluoreszenzleisten darstellende Gebilde in einem Arbeitsgang durch Spritzgießen hergestellt werden. Es ist sogar möglich, dieses Gebilde zusammen mit einer Reflektorleiste, vorzugsweise der Basisreflektorleiste durch Spritzgießen in einem Arbeitsgang zu bilden. Wenn zur Schwenkbarkeit der Leisten und der genannten Teilstücke mechanische Scharniere vorgesehen werden, können deren Teile bei der Herstellung der Leisten/Teilstücke durch Spritzgießen angeformt werden. Der Arbeitsaufwand zur Herstellung der gelenkigen Scharnierverbindungen zwischen den Teilen ist dann verhältnismäßig gering.

Bein einer bevorzugten Ausführungsform des Warndreiecks ist wenigstens ein Teil der Schwenkachse mit Torsionsfedern bestückt, durch welche die Leisten und ggfs. die Teilstücke in der ausgeschwenkten Strecklage gehalten und gegen die Federspannung schwenkbar sind. Bei der Entnahme des zusammengelegten Warndreiecks aus dem Köcher und Aufrichten der Seitenreflektorleisten schwenken die an der bzw. den Reflektorleiste(n) angebrachten Fluoreszenzleiste(n) automatisch in ihre Sichtlage, d.h. um 180° in die zur Reflektorleiste gestreckte Position. Bei der Ausführungsform mit den ziehharmonikaartig zusammengelegten, aus Teilstücken bestehenden Fluoreszenzleisten richtet sich das innere Fluoreszenzdreieck selbsttätig auf, so daß es am oberen Ende zur Stabilisierung nur an der hinteren Reflektorleiste befestigt werden muß.

Fünf Ausführungsformen des erfindungsgemäßen Warndreiecks werden nachfolgend an Hand der Zeichnung näher beschrieben. Es zeigen
Figur 1 die Rückseite einer ersten Ausführungsform des Warndreiecks im aufgerichteten Zustand;
Figur 2 die Rückseite des in Figur 1 gezeigten Warndreiecks in einem teilweise zusammengelegten Zustand;
Figur 3 eine Teildarstellung der Reflektorleiste mit Fluoreszenzleiste einer zweiten Ausführungsform des Warndreiecks im Längsschnitt;
Figur 4 die Draufsicht der in Figur 3 gezeigten Reflektorleiste;
Figur 5 die Rückseite einer dritten Ausführungsform des Warndreiecks im aufgerichteten Zustand;
Figur 6 eine vierte Ausführungsform des erfindungsgemäßen Warndreiecks im aufgerichteten Zustand mit noch eingeschwenkten Standbeinen;
Figur 7 das Warndreieck der Figur 6 in einem Zustand während des Zusammenlegens;
Figur 8 einen Schnitt nach der Linie III-III der Figur 7 in vergrößertem Maßstab;
Figur 9 eine fünfte Ausführungsform des erfindungsgemäßen Warndreiecks mit aufgerichteten äußeren Reflektorleisten und nur teilweise aufgerichtetem Fluoreszenzdreieck;
Figur 10 eine Darstellung wie in Figur 9 wobei jedoch das innere Fluoreszenzdreieck vollständig aufgerichtet ist; und
Figur 11 eine Rückansicht des in Figur 9 gezeigten Warndreiecks, bei dem die eine Reflektorleiste angehoben ist, um das zusammengelegte Fluoreszenzdreieck zu zeigen.

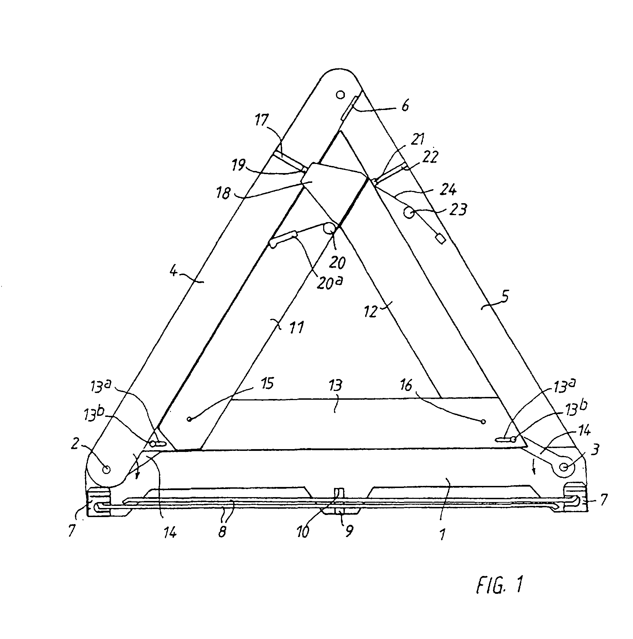

Das in Figur 1 gezeigte Warndreieck hat an den beiden Enden einer Basismetallplatte 1 je eine in den Gelenken 2 und 3 schwenkbar angebrachte Reflektorleiste 4 bzw. 5. Die Metallplatte 1 trägt ebenfalls vorderseitig eine Reflektorleiste (nicht sichtbar). Die Leisten 4 und 5 tragen vorderseitig Reflektoren und haben am oberen Ende eine Rastverbindung 6, durch die der in Figur 1 gezeigte aufgerichtete Zustand des Dreiecks stabilisiert wird. An den beiden Enden der Metallplatte 1 sind beidseitig Lagerkörper 7 befestigt, in denen die Standbeine 8 schwenkbar gelagert sind. Die Metallplatte 1 trägt ferner in der Mitte beidseitig eine Rastaufnahme 9, in der die Standbeine 8 in der dargestellten eingeschwenkten Lage festgelegt werden. Die Oberseite der Rastaufnahme 9 bildet einen Anschlag 10, dessen Bedeutung weiter unten erläutert wird.

Jeder der drei Reflektorleisten ist eine lose Fluoreszenzleiste 11,12,13 zugeordnet. Die im wesentlichen trapezförmige Fluoreszenzleiste 13 hat in den beiden unteren Ecken Langlöcher 13^{a} und ist durch ein in dem Langloch verschiebliches Gelenk 13^{b} mit einer Lasche 14 verbunden, die ihrerseits durch die Gelenke 2 bzw. 3 mit der Metallplatte 1 gelenkig verbunden ist. Durch die beiden Verschiebegelenke 13^{a},13^{b} ist es möglich, die Fluoreszenzleiste 13 relativ zur Metallplatte 1 abzusenken und über die Rückseite der Platte 1 zu schieben, wobei die Laschen 14 entsprechend den Pfeilen in Figur 1 aufeinander zu geschwenkt werden.

Die Fluoreszenzleiste 11 ist über ein Gelenk 15 mit der Fluoreszenzleiste 13 verbunden, desgleichen die Fluoreszenzleiste 12 über ein Gelenk 16. Am oberen Ende ist die Fluoreszenzleiste 11 in einer auf der Rückseite der Reflektorleiste 4 quer zu ihrer Längsrichtung verlaufenden Nut 17 geführt. Hierzu ist an der Rückseite der Fluoreszenzleiste 11 eine von dieser auf Abstand gehaltene Lasche 18 angebracht, die über die Reflektorleiste 4 greifen kann und einen in der Nut 17 geführten Zapfen 19 trägt. Eine Schraubenfeder 20 ist mit ihrem einen Schenkel in der Lasche 18 verankert, während der andere Schenkel 20^{a} dem Rand der Reflektorleiste 4 federnd anliegt. Die Fluoreszenzleiste 11 wird so immer in der in Figur 1 gezeigten, ausgefahrenen Lage gehalten und kann nur gegen die Kraft der Feder 20 in die Übereinanderlage zu der Leiste 4 gebracht werden. Die Fluoreszenzleiste 12 trägt unmittelbar einen Zapfen 21, der in einer Nut 22 geführt ist, die in der Reflektorleiste 5 quer zu ihrer Längsrichtung ausgebildet ist. Die Reflektorleiste 5 trägt ferner eine Schraubenfeder 23, deren einer Schenkel an der Reflektorleiste 5 befestigt ist, während der andere Schenkel 24 auf den Zapfen 21 drückt, so daß die Fluoreszenzleiste 12 in der in Figur 1 gezeigten Lage gehalten wird und nur gegen die Kraft der Feder 23 über die Leiste 5 geschoben werden kann.

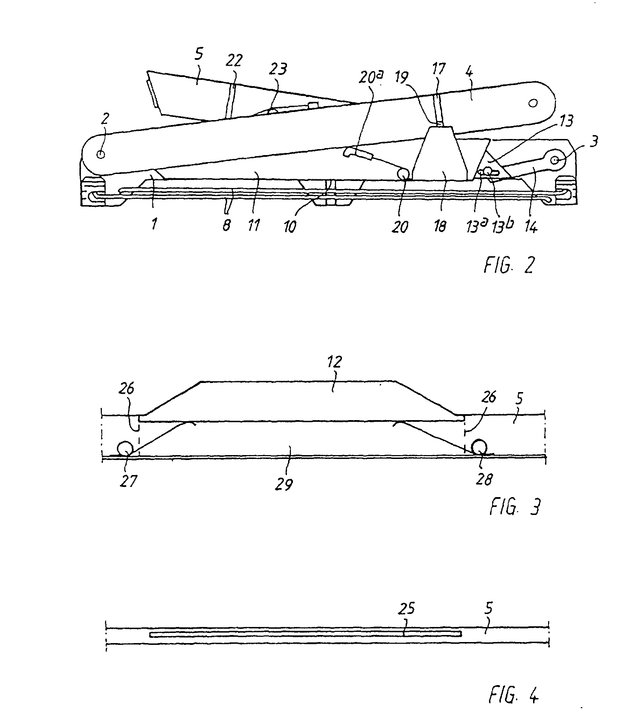

Figur 2 zeigt das Warndreieck in einem teilweise zusammengelegten Zustand. Es ist ersichtlich, daß sich hierbei die Fluoreszenzleisten 11,12 und 13 hinter die Metallplatte 1 legen, so daß das Dreieck im vollständig zusammengelegten Zustand nur die Breite der Metallplatte 1 hat. Dabei kommen die Fluoreszenzleisten an dem Anschlag 10 zur Anlage. Nach der Entnahme des zusammengelegten Warndreiecks aus seinem Köcher gehen die Reflektorleisten 4 und 5 infolge der Wirkung der Federn 20,23 sogleich in die in Figur 2 gezeigte Lage, wodurch das Aufrichten in die in Figur 1 gezeigte Dreiecksform erleichtert wird.

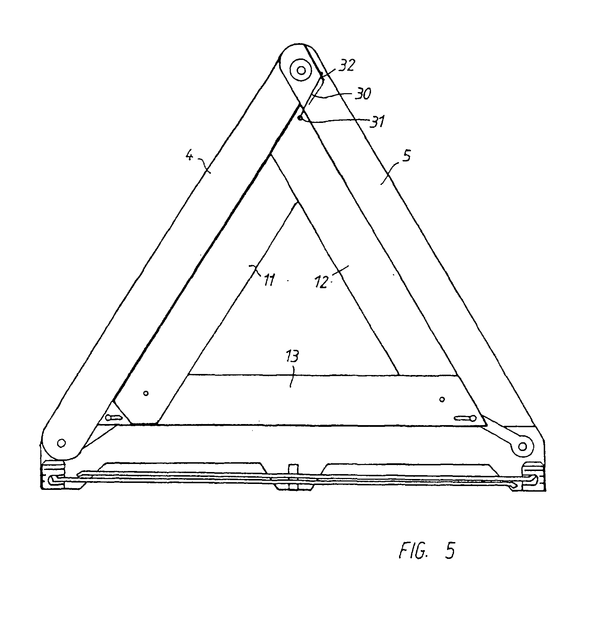

Während bei der in den Figuren 1 und 2 dargestellten Ausführungsform die Federn 20,23 außen an der Rückseite der Fluoreszenzleiste 11 bzw. der Reflektorleiste 5 angebracht sind und die Fluoreszenzleisten außerhalb der Reflektorleisten liegen, ist es auch möglich, die Fluoreszenzleisten in ihren Reflektorleisten senkrecht zu deren Längsrichtung verschiebbar unterzubringen. Hierzu sind in der Leiste 5 Führungen 26 und ist an der zur Mitte des aufgerichteten Dreiecks gerichteten Schmalseite ein Schlitz 25 ausgebildet, durch den die Fluoreszenzleiste 12 bis in die in Figur 3 gezeigte Lage aus der Reflektorleiste 5 ausfahren kann. Die Reflektorleiste 5 enthält bei der in den Figuren 3 und 4 gezeigten Ausführungsform zwei Schraubenfedern 27 und 28, deren einer Schenkel an dem Gehäuse der Reflektorleiste 5 abgestützt ist und deren anderer Schenkel gegen die Innenkante der Fluoreszenzleiste 12 drückt, wie in Figur 3 gezeigt, so daß diese durch die Federn 27 und 28 in der in Figur 3 gezeigten Lage gehalten wird und durch leichten Druck auf die Außenkante in die Leiste 5 eingeschoben werden kann. Bei dieser Ausführungsform sind vorzugsweise die drei Reflektorleisten mit einer solchen einschiebbaren Fluoreszenzleiste bestückt.

Bei der in Figur 5 gezeigten dritten Ausführungsform sind anstelle der in Figur 1 gezeigten Federn 20,23 und Führungen 17, 22 die oberen Enden der Fluoreszenzleisten 11 und 12 durch Koppelschnüre 30 mit ihrer Reflektorleiste 4 bzw. 5 verbunden. Hierzu haben die Leisten 11 und 12 am oberen Ende eine Durchbohrung 31, in der das eine Ende der Koppelschnur 30 befestigt ist. Die Reflektorleisten 4 und 5 haben ebenfalls Bohrungen 32 zur Befestigung des anderen Endes der Koppelschnur 30. In Figur 5 ist nur die Kopplung der Leisten 12 und 5 sichtbar, während die Kopplung der Leisten 11 und 4 durch eine auf der Vorderseite und daher in Figur 5 nicht sichtbare Koppelschnur hergestellt ist. Die Fluoreszenzleisten 11 und 12 sind an ihren unteren Enden in der gleichen Weise wie bei der in Figur 1 gezeigten Ausführungsform und dort beschrieben mit der Fluoreszenzleiste 13 und diese ihrerseits mit der Metallplatte 1 verbunden. Die Fluoreszenzleisten 11-13 führen beim Zusammenlegen und Aufrichten des Warndreiecks relativ zu ihren Reflektorleisten im wesentlichen die gleichen Verschiebungen/Verschwenkungen aus wie bei der in Figur 1 gezeigten Ausführungsform.

Die Fluoreszenzleisten bestehen zweckmäßigerweise aus einem in der Masse mit einem Fluoreszenzfarbstoff rot eingefärbten Kunststoff.

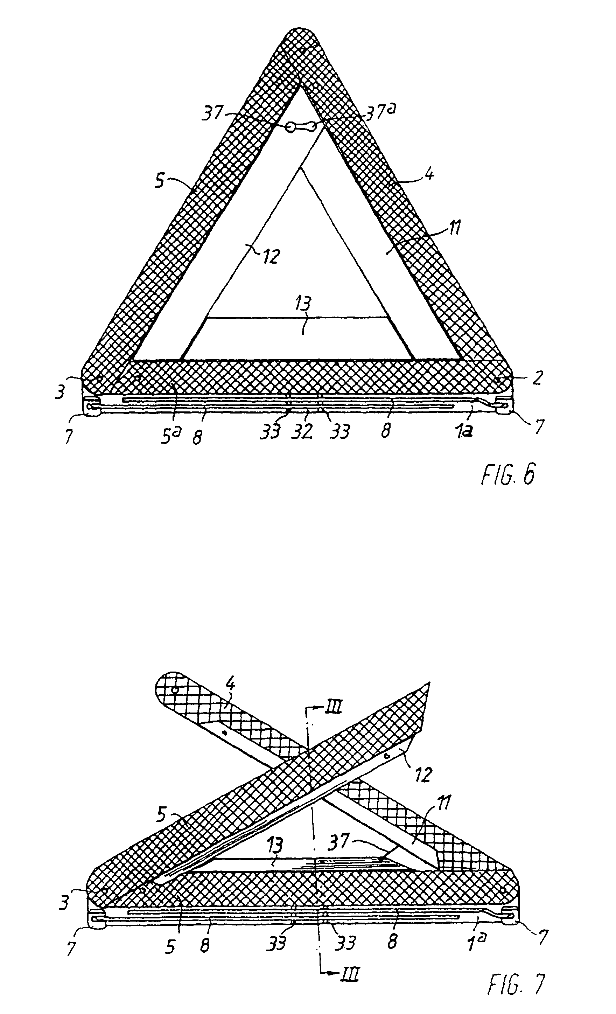

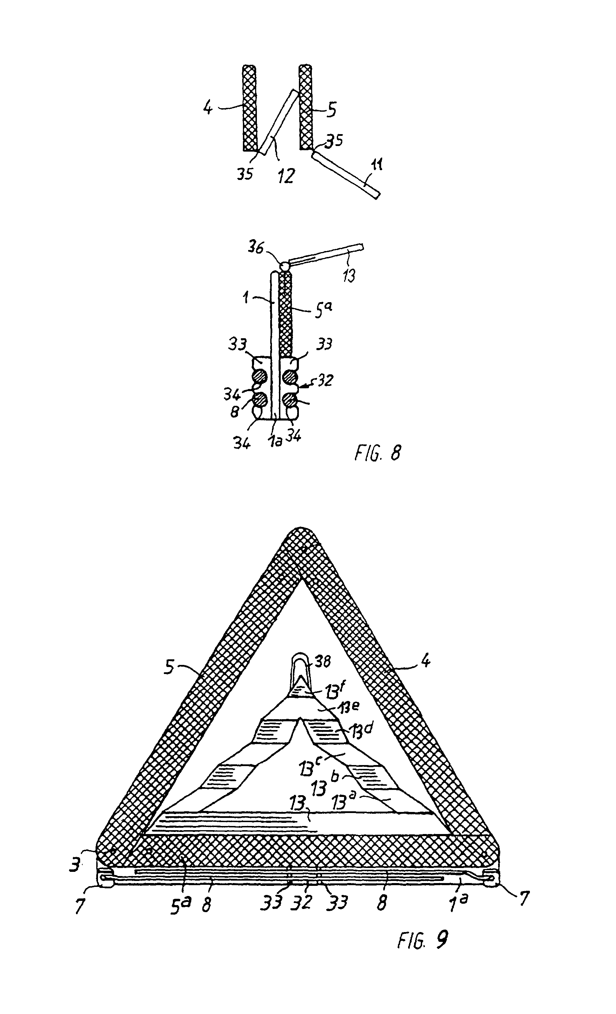

Nach den Figuren 6 bis 8 besteht das Warndreieck im wesentlichen aus einer Metallplatte 1 mit vorderseitig angebrachter Nachtreflektorleiste 5^{a},an denen mittels Gelenken 2,3 die Reflektorleisten 4 und 5 schwenkbar angebracht sind. An den zur Dreiecksmitte gewandten Längskanten der Leisten 4-5^{a} sind trapezförmige Fluoreszenzleisten 11-13 über Filmscharniere angebracht. Die Fluoreszenzleiste 1 trägt am oberen Ende vorderseitig einen Knopf 37 während die Leiste 12 ein mit dem Knopf 37 zusammenwirkendes Langloch 37^{a} aufweist. Durch Einrichtung 37,37^{a} können die Fluoreszenzleisten 11 und 12 in der in Figur 6 gezeigten gänzlich ausgeschwenkten Lage stabilisiert werden. Die Filmscharniere 35 zwischen den Reflektorleisten 4-5^{a} einerseits und den entsprechenden Fluoreszenzleisten 11-13 andererseits erstrecken sich nur über einen Teil der Länge der Fluoreszenzleisten. In dem scharnierfreien Bereich, vorzugsweise zwischen zwei Filmscharnierteilen, ist eine Torsionsfeder 36 mit dem einen Schenkel in derReflektorleiste und dem anderen Schenkel in der Fluoreszenzleiste verankert (vergl. Fig. 8). Durch die Torsionsfedern 36 werden die Fluoreszenzleisten 11-13 in der in Figur 6 gezeigten Strecklage zu ihrer Reflektorleiste 4 bzw. 5 bzw. 6 gehalten. Beim Zusammenlegen des Warndreiecks können die Fluoreszenzleisten 11-13 jeweils vor ihre Reflektorleiste 4-5^{a} geschwenkt werden, wie dies in Figur 7 für einen Zwischenzustand gezeigt ist. Im vollständig zusammengelegten Zustand liegen die vollständig umgeklappten Fluoreszenzleisten zwischen den Reflektorleisten, so daß sich die Breite des erhaltenen Pakets auf die der Metallplatte 1 reduziert. Bei der Basisfluoreszenzleiste 13 kann zur Aufrichtung anstelle einer Torsionsfeder 36 auch ein flexibles Koppelglied 37 in Form einer Schnur vorgesehen sein, die die Innenkante der Leiste 13mit der Reflektorleiste 4 verbindet, so daß die Reflektorleiste 4 beim Hochschwenken die Leiste 13 in ihre Sichtlage mitnimmt.

Die Metallplatte 1 trägt in einem über die Basisreflektorleiste 5^{a} nach unten überstehenden Teil 1^{a} an beiden Enden Lagerkörper 7, in denen beiderseits der Platte 1 je ein Standbein 8 schwenkbar gelagert ist. Ferner sind auf dem überstehenden Teil 1^{a} der Metallplatte 1 beidseitig Halter 32 zur Festlegung der Standbeine 8 in eingeschwenkter Lage angebracht. Der Halter 32 hat einen vorstehenden Steg 33 mit zwei Ausnehmungen 34, in die die eingeschwenkten Standbeine 8 einrasten können, vergl. Figur 8.

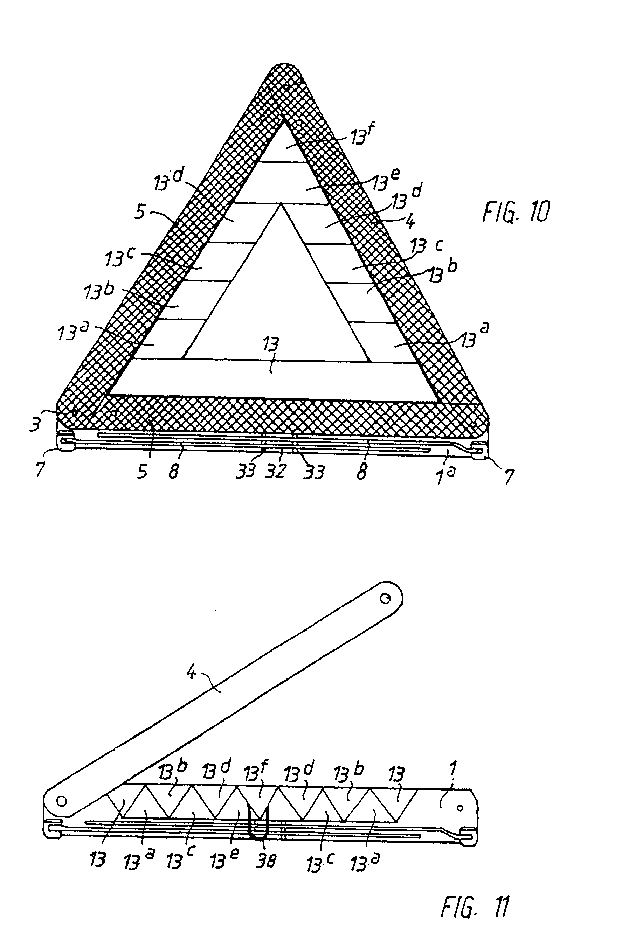

Die in den Figuren 9 bis 11 gezeigte Ausführungsform des Warndreiecks unterscheidet sich von der in Figur 6 gezeigten Ausführungsform im wesentlichen in der Ausbildung des Fluoreszenzdreiecks. Dieses Dreieck besteht aus einer an der Basisreflektorleiste 5^{a} angelenkten trapezförmigen Fluoreszenzleiste 13, an die sich an den Enden je vier parallelogrammförmige Teilstücke 13^{a}-13^{d} anschließen. An die Teilstücke 13^{d} ist ein trapezförmiges Teilstück 13^{e} und an dieses ein dreieckiges Teilstück 13^{f} angeschlossen. Die Leiste 13 ist mit den beiden anliegenden Teilstücken 13^{a} durch Filmscharniere verbunden; ebenso sind die Teilstücke 13^{a}-13^{f} durch Filmscharniere verbunden, die abwechselnd an der Rückseite und Vorderseite der Teilstücke angeordnet sind, so daß das gesamte Fluoreszenzdreieck 13-13^{f} ziehharmonikaartig zusammengelegt werden kann, wie dies aus Figur 9 ersichtlich ist. Das so zusammengelegte Fluoreszenzdreieck 13-13^{f} hat dann nur die Breite der Leiste 13 und liegt der Rückseite der Metallplatte 1 an, wie dies aus Figur 11 zu entnehmen ist. Das dreieckige Teilstück 13^{f} trägt eine Schlaufe 38, mit der das Fluoreszenzdreieck 13-13^{f} in der in Figur 10 gezeigten gestreckten Lage an einem an der Rückseite der Reflektorleiste 5 befindlichen Haken (nicht gezeigt) befestigt werden kann.

Die Erfindung ist nicht auf die dargestellten Ausführungsformen beschränkt. So kann bei der Ausführungsform der Figuren 9 bis 11 die Gelenkverbindung zur Reflektorleiste auch an der Reflektorleiste 4 oder 5 vorgesehen werden. Die Filmscharniere können auch durch mechanische, an die einzelnen Teilstücke/Leisten angespritzte Scharniere ersetzt werden. Die Scharniere bei der Ausführungsform nach den Figuren 9 bis 11 können zusätzlich mit Torsionsfedern bestückt sein, so daß sich das Fluoreszenzdreieck automatisch aufrichtet, wenn es durch das Aufrichten der Reflektorleisten 4 und 5 aus der in Figur 11 gezeigten Lage freigegeben wird.

## Patentansprüche

1. Zusammenlegbares Warndreieck zur Mitführung in Kraftfahrzeugen, mit einer Basisreflektorleiste, an der direkt oder über eine Metallplatte (1) ausschwenkbare Standbeine (8) angebracht sind, und an der Basisreflektorleiste und/oder der Metallplatte schwenkbar angebrachten Seitenreflektorleisten (4,5), wobei jeder der drei Reflektorleisten eine rote Fluoreszenzleiste (11,12,13) zugeordnet ist, **dadurch gekennzeichnet, daß** jede Fluoreszenzleiste (11,12,13) zwischen einer ausgefahrenen Sichtlage neben der Reflektorleiste und einer vor, hinter oder in die Reflektorleiste eingefahrenen Lage beweglich ist.

2. Warndreieck nach Anspruch 1, **dadurch gekennzeichnet, daß** wenigstens eine Fluoreszenzleiste (11,12,13) durch Feder(n) (20,23; 27,28) in der ausgefahrenen Lage gehalten und gegen die Federspannung einfahrbar ist.

3. Warndreieck nach Anspruch 1, **dadurch gekennzeichnet, daß** die roten Fluoreszenzleisten (11,12) der beiden Seitenreflektorleisten (4,5) durch flexible Koppelglieder (30) mit ihrer Seitenreflektorleiste verbunden sind.

4. Warndreieck nach einem der Ansprüche 1 bis 3, **dadurch gekennzeichnet, daß** die Fluoreszenzleiste (13) der Basisreflektorleiste beidendig über Gelenke (15,16) mit den beiden anderen Fluoreszenzleisten (11,12) und der Basisreflektorleiste oder ihrer Metallplatte (1) verbunden ist.

5. Warndreieck nach Anspruch 4, **dadurch gekennzeichnet, daß** die Fluoreszenzleiste (13) der Basisreflektorleiste wenigstens an einem Ende über ein Verschiebungsgelenk (13^{a},13^{b}) mit einer an der Basisreflektorleiste/Metallplatte (1) angelenkten Lasche (14) verbunden ist.

6. Warndreieck nach einem der Ansprüche 1 bis 3, **dadurch gekennzeichnet, daß** an den Fluoreszenzleisten (11,12) Zapfen (19,21) angebracht sind, die in auf den Rückseiten der Reflektorleisten (4,5) ausgebildete Führungsnuten (17 bzw. 22) eingreifen.

7. Warndreieck nach einem der Ansprüche 1 bis 4, **dadurch gekennzeichnet, daß** die Reflektorleisten einen Aufnahmeraum (29) und einen Schlitz (25) für ihre Fluoreszenzleiste (12) enthalten und in die Reflektorleisten wenigstens eine die Fluoreszenzleiste (12) durch den Schlitz (25) nach außen drückende Feder (27,28) eingesetzt ist.

8. Zusammenlegbares Warndreieck zur Mitführung in Kraftfahrzeugen mit einer Basisreflektorleiste, an der direkt oder über eine Metallplatte (1) ausschwenkbare Standbeine (8) angebracht sind, und an der Basisreflektorleiste und/oder der Metallplatte schwenkbar angebrachten Seitenreflektorleisten (4,5), wobei den Reflektorleisten rote Fluoreszenzleisten zugeordnet sind, **dadurch gekennzeichnet, daß** die Fluoreszenzleisten (11,12,13) an der der Mitte des aufgerichteten Dreiecks zugewandten Kante einer oder aller drei Reflektorleisten (4,5,5^{a}) zwischen einer ausgeschwenkten Sichtlage und einer der Reflektorleiste anliegenden Lage schwenkbar gelagert sind.

9. Warndreieck nach Anspruch 8, **dadurch gekennzeichnet, daß** die Fluoreszenzleisten (11-13) an die Vorderseite ihrer Reflektorleisten (4,5,5^{a}) einschwenkbar sind.

10. Warndreieck nach Anspruch 8 oder 9, **dadurch gekennzeichnet, daß** die Fluoreszenzleiste (13) der Basisreflektorleiste (5^{a}) durch ein flexibles Koppelglied (37) mit einer Seitenreflektorleiste (4) verbunden ist.

11. Warndreieck nach einem der Ansprüche 8 bis 10, **dadurch gekennzeichnet, daß** eine Fluoreszenzleiste (13) an einer Reflektorleiste (5^{a}) angelenkt ist und die beiden anderen Fluoreszenzleisten aus Teilstücken (13^{a}-13^{f}) bestehen, die Teilstücke untereinander und mit der Fluoreszenzleiste (13) über parallele Schwenkachsen verbunden und ziehharmonikaartig zusammenlegbar sind und das der Reflektorleiste (5^{a}) entfernte Teilstück (13^{f}) ein Mittel (38) zur Anbringung an einer der beiden anderen Reflektorleisten (4 oder 5) aufweist.

12. Warndreieck nach einem der Ansprüche 8 bis 11, **dadurch gekennzeichnet, daß** die Schwenkachsen zwischen Reflektorleiste(n) (4-5^{a}) und Fluoreszenzleiste(n) (11,12 bzw. 13) bzw. zwischen der Fluoreszenzleiste (13) und den Teilstücken (13^{a}-13^{f}) sowie zwischen den Teilstücken untereinander durch Filmscharniere oder mechanische Scharniere gebildet sind.

13. Warndreieck nach einem der Ansprüche 8 bis 12, **dadurch gekennzeichnet, daß** wenigstens ein Teil der Schwenkachsen mit Torsionsfedern (36) bestückt ist, durch welche die Leisten (4,11; 5,12; 5^{a},13) und ggfs. die Teilstücke (13^{a}-13^{f}) in der ausgeschwenkten Sichtlage gehalten und gegen die Federspannung einschwenkbar sind.

## Claims

1. A collapsible warning triangle for carrying in motor vehicles, with a base reflector strip, to which swivelling support legs (8) are fitted directly or via a metal plate (1), and lateral reflector strips (4, 5) fitted in a swivelling manner to the base reflector strip and/or the metal plate, whereby a red fluorescent strip (11, 12, 13) is assigned to each of the three reflector strips, **characterised in that** each fluorescent strip (11, 12, 13) is mobile between an extended visible position beside the reflector strip and a retracted position in front of, behind or into the reflector strip.

2. The warning triangle according to claim 1, **characterised in that** at least one fluorescent strip (11, 12, 13) is held by spring(s) (20, 23; 27, 28) in the extended position and can be retracted against the spring tension.

3. The warning triangle according to claim 1, **characterised in that** the red fluorescent strips (11, 12) of the two lateral reflector strips (4, 5) are connected by flexible,coupling elements (30) to their lateral reflector strip.

4. The warning triangle according to any one of claims 1 to 3, **characterised in that** the fluorescent strip (13) of the base reflector strip is connected at both ends via links (15, 16) to the two other fluorescent strips (11, 12) and the base reflector strip or its metal plate (1).

5. The warning triangle according to claim 4, **characterised in that** the fluorescent strip (13) of the base reflector strip is connected at least at one end via a displacement link (13^{a}, 13^{b}) to a fishplate (14) linked to the base reflector strip/metal plate (1).

6. The warning triangle according to any one of claims 1 to 3, **characterised in that** there are fitted on the fluorescent strips (11, 12) pegs (19, 21) which engage in guide grooves (17 and 22) formed on the rear sides of the reflector strips (4, 5).

7. The warning triangle according to any one of claims 1 to 4, **characterised in that** the reflector strips contain an accommodation space (29) and a slot (25) for their fluorescent strip (12) and there is inserted into the reflector strips at least one spring (27, 28) pressing the fluorescent strip (12) outwards through the slot (25).

8. A collapsible warning triangle for carrying in motor vehicles with a base reflector strip, to which swivelling support legs (8) are fitted directly or via a metal plate (1), and lateral reflector strips (4, 5) fitted in a swivelling manner to the base reflector strip and/or the metal plate, whereby red fluorescent strips are assigned to the reflector strips, **characterised in that** the fluorescent strips (11, 12, 13) are mounted at the edge of one or all of the three reflector strips (4, 5, 5^{a}) facing the centre of the erected triangle in such a way as to be swivellable between a swivelled-out visible position and a position adjacent to the reflector strip.

9. The warning triangle according to claim 8, **characterised in that** the fluorescent strips (11-13) can be swivelled in at the front side of their reflector strips (4, 5, 5^{a}).

10. The warning triangle according to claim 8 or 9, **characterised in that** the fluorescent strip (13) of the base reflector strip (5^{a}) is connected by a flexible coupling element (37) to a lateral reflector strip (4).

11. The warning triangle according to any one of claims 8 to 10, **characterised in that** one fluorescent strip (13) is linked to a reflector strip (5^{a}) and the two other fluorescent strips consist of sections (13^{a}-13^{f}), the sections are connected with one another and with the fluorescent strip (13) via parallel swivel pins and are collapsible in a concertina-like manner and the section (13^{f}) distant from the reflector strip (5^{a}) has means (38) for fitting to one, of the two other reflector strips (4 or 5).

12. The warning triangle according to any one of claims 8 to 11, **characterised in that** the swivel pins are formed by film hinges or mechanical hinges between reflector strip(s) (4-5^{a}) and fluorescent strip(s) (11, 12 and 13) and respectively between the fluorescent strip (13) and the sections (13^{a}-13^{f}) as well as between the sections among one another.

13. The warning triangle according to any one of claims 8 to 12, **characterised in that** at least some of the swivel pins are equipped with torsion springs (36), by means of which the strips (4, 11; 5, 12; 5^{a}, 13) and, as the case may be, the sections (13^{a}-13^{f}) are held in the swivelled-out visible position and can be swivelled in against the spring tension.

## Revendications

1. Triangle de signalisation pliant destiné à être embarqué dans des véhicules automobiles, avec un bandeau réflecteur de base, sur lequel des pieds pivotants (8) sont montés soit directement ou par l'intermédiaire d'une plaque métallique (1) et avec des bandeaux réflecteurs latéraux (4,5) montés de façon pivotante sur le bandeau réflecteur de base et/ou sur la plaque métallique, un bandeau rouge fluorescent (11, 12, 13) étant associé à chacun des trois bandeaux réflecteurs, **caractérisé en ce que** chaque bandeau fluorescent (11, 12, 13) est mobile entre une position visible sortie à côté du bandeau réflecteur et une position sortie à l'avant, à l'arrière ou dans le bandeau réflecteur.

2. Triangle de signalisation selon la revendication 1, **caractérisé en ce qu'**au moins un bandeau fluorescent (11, 12, 13) est maintenu en position sortie par ressort(s) (20, 23 ; 27, 28) et **en ce qu'**il peut être rentré contre la tension du ressort.

3. Triangle de signalisation selon la revendication 1, **caractérisé en ce que** les bandeaux fluorescents rouges (11, 12) des deux bandeaux réflecteurs latéraux (4, 5) sont reliés à leur bandeau réflecteur latéral par des organes d'accouplement (30).

4. Triangle de signalisation selon l'une quelconque des revendications 1 à 3, **caractérisé en ce que** le bandeau fluorescent (13) du bandeau réflecteur de base est relié par ses deux extrémités avec les deux autres bandeaux fluorescents (11, 12) et avec le bandeau réflecteur de base ou avec sa plaque métallique (1), par l'intermédiaire d'articulations (15, 16).

5. Triangle de signalisation selon la revendication 4, **caractérisé en ce que** le bandeau fluorescent (13) du bandeau réflecteur de base est relié par au moins une extrémité avec une languette (14) articulée sur le bandeau réflecteur de base/la plaque métallique (1), par l'intermédiaire d'une articulation de déplacement (13^{a}, 13^{b}).

6. Triangle de signalisation selon l'une quelconque des revendications 1 à 3, **caractérisé en ce que** des tenons (19, 21) qui s'accrochent dans des rainures de guidage (17 ou 22) formées sur le faces arrière des bandeaux réflecteurs (4, 5) sont montés sur les bandeaux fluorescents (11, 12).

7. Triangle de signalisation selon l'une quelconque des revendications 1 à 4, **caractérisé en ce que** les bandeaux réflecteurs contiennent un espace de réception (29) et une fente (25) pour leur bandeau fluorescent (12) et au moins un ressort (27, 28) pressant le bandeau fluorescent (12) vers l'extérieur, à travers la fente (25) étant intégré dans les bandeaux réflecteurs.

8. Triangle de signalisation pliant destiné à être embarqué dans des véhicules automobiles, avec un bandeau réflecteur de base, sur lequel des pieds pivotants (8) sont montés soit directement ou par l'intermédiaire d'une plaque métallique (1) et avec des bandeaux réflecteurs latéraux (4,5) montés de façon pivotante sur le bandeau réflecteur de base et/ou sur la plaque métallique, des bandeaux rouges fluorescents (11, 12, 13) étant associés aux bandeaux réflecteurs, **caractérisé en ce que** les bandeaux fluorescents (11, 12, 13) sont logés de façon pivotante sur le bord opposé au milieu du triangle monté de l'un ou des trois bandeaux réflecteurs (4, 5, 5a), entre une position visible dépliée et une position appliquée contre le bandeau réflecteur.

9. Triangle de signalisation selon la revendication 8, **caractérisé en ce que** les bandeaux fluorescents (11 à 13) sont escamotables sur la face avant de leurs bandeaux réflecteurs (4, 5, 5^{a}).

10. Triangle de signalisation selon l'une quelconque des revendications 8 ou 9, **caractérisé en ce que** le bandeau fluorescent (13) du bandeau réflecteur de base (5^{a}) est relié à un bandeau réflecteur latéral (4), par l'intermédiaire d'un organe d'accouplement flexible (37).

11. Triangle de signalisation selon l'une quelconque des revendications 8 à 10, **caractérisé en ce qu'**un bandeau fluorescent (13) est articulé sur une bandeau réflecteur (5^{a}) et **en ce que** les deux autres bandeaux fluorescents sont constitués d'éléments partiels (13^{a} à 13^{f}), **en ce que** les éléments partiels sont reliés entre eux et avec le bandeau fluorescent (13) par l'intermédiaire d'axes pivotants et pliables à la manière d'un accordéon et **en ce que** l'élément partiel (13^{f}) éloigné du bandeau réflecteur (5^{a}) est muni d'un moyen (38) pour son montage sur l'un des deux autres bandeaux réflecteurs (4 ou 5).

12. Triangle de signalisation selon l'une quelconque des revendications 8 à 11, **caractérisé en ce que** les axes pivotants entre le(s) bandeau(x) réflecteur(s) (4 à 5a) et le(s) bandeau(x) fluorescent(s) (11, 12 ou 13) ou entre le bandeau fluorescent (13) et les éléments partiels (13^{a} à 13^{f}) ainsi qu'entre les éléments partiels les uns par rapport aux autres sont formés par des charnières films ou par des charnières mécaniques.

13. Triangle de signalisation selon l'une quelconque des revendications 8 à 12, **caractérisé en ce qu'**au moins une partie des axes pivotants est équipée de ressorts de torsion (36), par lesquels les bandeaux (4, 11 ; 5, 12 ; 5^{a}, 13) et le cas échéant les éléments partiels (13^{a} à 13^{f}) sont maintenus dans peur position visible sortie et sont escamotables contre la tension du ressort.
